(19) Europäisches Patentamt
European Patent Office
Office européen des brevets

(11) **EP 2 940 522 B1**

(12) **FASCICULE DE BREVET EUROPEEN**

(45) Date de publication et mention
de la délivrance du brevet:
**02.12.2020 Bulletin 2020/49**

(51) Int Cl.:
***G01S 7/4915*** *(2020.01)*   ***G01S 13/34*** *(2006.01)*
***G01S 17/34*** *(2020.01)*

(21) Numéro de dépôt: **15165519.8**

(22) Date de dépôt: **28.04.2015**

(54) **PROCÉDÉ DE GÉNÉRATION DE M SIGNAUX DE DÉMODULATION**

VERFAHREN ZUR ERZEUGUNG VON DEMODULATIONSSIGNALEN

METHOD FOR GENERATING M DEMODULATION SIGNALS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.04.2014 FR 1400991**

(43) Date de publication de la demande:
**04.11.2015 Bulletin 2015/45**

(73) Titulaire: **THALES**
**92400 Courbevoie (FR)**

(72) Inventeurs:
 • **Feneyrou, Patrick**
  **91767 Palaiseau Cedex (FR)**
 • **Pillet, Grégoire**
  **91767 Palaiseau Cedex (FR)**
 • **Minet, Jean**
  **91767 Palaiseau Cedex (FR)**

(74) Mandataire: **Lavoix**
**2, place d'Estienne d'Orves**
**75441 Paris Cedex 09 (FR)**

(56) Documents cités:
**EP-A2- 0 849 622      US-A1- 2010 085 992
US-A1- 2011 080 580      US-A1- 2013 215 919**

• **ZEB W BARBER ET AL: "Linearization of
ultra-broadband optical chirps for precision
length metrology", CONFERENCE ON LASERS
AND ELECTRO-OPTICS (CLEO) AND QUANTUM
ELECTRONICS AND LASER SCIENCE
CONFERENCE (QELS), 2010 : 16 - 21 MAY 2010,
SAN JOSE, CA, USA, IEEE, PISCATAWAY, NJ ,
USA, 16 mai 2010 (2010-05-16), pages 1-2,
XP031700695, ISBN: 978-1-55752-890-2**

**EP 2 940 522 B1**

**Description**

La présente invention concerne un procédé de génération de M signaux de démodulation, M étant un nombre entier strictement positif. L'invention concerne également un procédé de démodulation d'un signal à démoduler par au moins M signaux obtenus par la mise en œuvre d'un tel procédé, un dispositif propre à mettre en œuvre un tel procédé de génération de M signaux de démodulation, et un système de détection comprenant un tel dispositif.

L'invention s'applique au domaine de la détection et de l'analyse d'au moins une cible par des ondes électromagnétiques, par exemple dans le cadre d'applications radar ou lidar.

La cible est par exemple une cible dure ou une cible diffuse.

Par « cible dure », on entend généralement un objet solide.

Par « cible diffuse », on entend généralement un gaz ou un mélange de gaz, comportant éventuellement des particules en suspension dont les dimensions sont du même ordre de grandeur que la longueur d'onde des ondes électromagnétiques.

Une telle détection a par exemple pour but la mesure de grandeurs physiques relatives à l'atmosphère, la réalisation d'une cartographie de vents, ou encore la réalisation de mesures de distance et/ou de vitesse relatives à une cible dure.

De façon classique, une onde électromagnétique est émise, à partir d'une source, à destination de la cible et diffusée par ladite cible en une onde diffusée. Une partie de l'onde diffusée est collectée et analysée pour en déduire les caractéristiques relatives à la cible qui sont recherchées. De préférence, l'analyse effectuée sur l'onde collectée est une analyse spectrale. Plus précisément, des raies sont recherchées dans le spectre de l'onde collectée, la fréquence desdites raies étant représentative d'une grandeur relative à la cible.

Par « spectre » d'un signal, on entend la densité spectrale de puissance de ce signal.

La fréquence de l'onde émise étant généralement comprise entre quelques gigahertz et quelques centaines de terahertz, il est préférable de transposer le spectre de l'onde collectée à des fréquences basses pour réaliser cette analyse spectrale, par exemple des fréquences inférieures à quelques gigahertz, pour permettre un traitement par les instruments de mesure usuels afin de détecter les raies décrites précédemment.

A cet effet, il est connu de faire interférer l'onde collectée et partie de l'onde émise, encore appelée « oscillateur local », et d'enregistrer le signal de battement résultant, puis d'effectuer l'étape d'analyse spectrale sur ce signal de battement, généralement en bande de base, ou encore autour d'une fréquence basse prédéterminée égale à la différence entre les porteuses de l'onde collectée et de l'onde émise.

Toutefois, les sources d'ondes n'étant pas parfaites, l'onde générée par une source donnée connaît, au cours du temps, des fluctuations, par exemple des fluctuations d'intensité et/ou des fluctuations de la phase temporelle de l'onde générée.

Du fait de ces fluctuations, l'onde collectée à un instant donné a, par exemple, une phase partiellement décorrélée de l'onde émise à ce même instant, avec une partie de laquelle l'onde collectée est mélangée. Cette décorrélation se traduit, par rapport au cas idéal dépourvu de fluctuations, par un élargissement des raies d'intérêt dans le spectre du signal de battement, associé à une baisse de l'intensité des raies.

Il est connu de démoduler le signal de battement par un signal de référence prédéterminé, choisi en fonction de la distance à laquelle se trouve la cible. Le signal de référence prédéterminé est adapté pour compenser en partie les fluctuations de la source d'ondes, notamment ses fluctuations de phase.

Néanmoins, un tel procédé ne donne pas entière satisfaction.

En effet, le signal de référence n'est pas adapté pour compenser les fluctuations réelles de la source d'ondes au cours du temps. La compensation de l'élargissement des raies d'intérêt est donc limitée.

Un but de l'invention est donc de proposer un procédé de traitement du signal collecté conduisant à un traitement plus efficace de l'élargissement des raies d'intérêt.

A cet effet, l'invention a pour objet un procédé selon la revendication 1

Suivant d'autres aspects avantageux de l'invention, le procédé est selon l'une quelconque des revendications 2 à 6.

En outre, l'invention a pour objet un système de détection selon la revendication 7.

L'invention sera mieux comprise à l'aide de la description qui va suivre, donnée uniquement à titre d'exemple non limitatif et faite en se référant aux dessins annexés sur lesquels :

- la figure 1 est une représentation schématique d'un premier système de détection comprenant un premier dispositif de traitement selon l'invention ;
- la figure 2 est un spectre d'un signal avant la mise en œuvre du procédé de traitement selon l'invention ;
- la figure 3 est un graphe d'un signal de référence obtenu par la mise en œuvre du procédé de traitement selon l'invention ;
- la figure 4 est un spectre issu du signal de la figure 2, après la mise en œuvre du procédé de traitement ;

- la figure 5 est une représentation schématique d'un deuxième système de détection comprenant un deuxième dispositif de traitement selon l'invention ;
- la figure 6 est une représentation schématique d'un troisième système de détection mettant en oeuvre le dispositif de traitement de la figure 1 ;
- la figure 7 est une représentation schématique d'une partie d'un quatrième système de détection selon l'invention ; et
- la figure 8 est une représentation schématique d'une partie d'un cinquième système de détection selon l'invention.

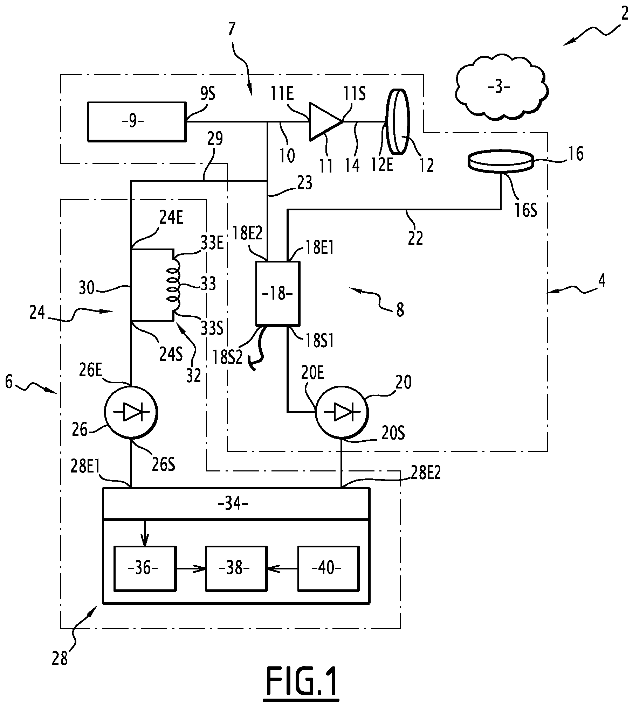

Un système de détection et d'analyse 2 est représenté sur la figure 1.

Le système de détection 2 est propre à interagir avec une cible 3. Notamment, le système de détection 2 est propre à émettre une onde électromagnétique vers la cible 3. La cible 3 est propre à diffuser l'onde électromagnétique émise par le système de détection 2.

La cible 3 est par exemple une cible dure ou une cible diffuse. La cible 3 est mobile ou immobile.

En outre, le système de détection 2 est propre à recevoir l'onde électromagnétique diffusée par la cible 3.

L'onde électromagnétique émise par le système de détection 2 est par exemple une onde optique.

Par « onde optique », on entend une onde électromagnétique dont la longueur d'onde dans le vide est comprise entre 100 nm et 20 $\mu$m.

Le système de détection 2 comporte un dispositif de télédétection 4 à technologie lidar (de l'anglais « light détection and ranging ») et un dispositif de traitement 6 selon l'invention.

Le dispositif de télédétection 4 est adapté pour émettre et recevoir des ondes optiques, et pour générer un signal électrique qui est fonction des ondes optiques reçues. Le dispositif de traitement 6 est propre à générer un signal de démodulation pour démoduler ledit signal électrique généré par le dispositif de télédétection 4 et à réaliser cette démodulation.

Plus précisément, le dispositif de télédétection 4 comporte un étage d'émission 7 pour émettre une onde optique en direction de la cible 3, et un étage de réception 8 pour recevoir l'onde optique diffusée par la cible 3 et générer un signal électrique qui est fonction de l'onde optique diffusée reçue.

L'étage d'émission 7 comporte une source laser 9 propre à générer une onde optique, un amplificateur optique 11 propre à amplifier l'onde optique, et un émetteur 12 propre à émettre vers la cible 3 l'onde optique amplifiée.

En variante, l'étage d'émission 7 ne comporte pas d'amplificateur optique.

La source laser 9 comprend une sortie 9S reliée par une première fibre optique 10 à une entrée 11E de l'amplificateur 11. En outre, une sortie 11S de l'amplificateur 11 est reliée par une fibre optique d'émission 14 à une entrée 12E de l'émetteur 12.

La source laser 9 est propre à générer une onde optique dont la longueur d'onde dans le vide centrale est avantageusement comprise entre 1,4 $\mu$m et 1,6 $\mu$m, par exemple égale à 1,55 $\mu$m.

La source laser 9 comporte de préférence une unité de pilotage, non représentée, pour modifier la fréquence de l'onde optique émise par la source laser 9 au cours du temps. Par exemple, l'unité de pilotage est adaptée pour faire varier au cours du temps la fréquence de l'onde émise par la source laser 9 en suivant un profil en dents de scie, avec une amplitude égale à quelques centaines de mégahertz et une période égale à quelques dizaines de microsecondes. De façon optionnelle, l'unité de pilotage est également adaptée pour modifier l'amplitude de l'onde optique émise par la source laser 9 au cours du temps.

La source laser 9 est par exemple une diode laser telle qu'une diode laser à rétroaction répartie (ou DFB, de l'anglais « distributed feedback »).

La première fibre optique 10 est préférentiellement une fibre à maintien de polarisation, avantageusement une fibre monomode à maintien de polarisation.

L'amplificateur 11 est propre à amplifier l'onde émise par la source laser 9 et injectée à son entrée 11E. L'amplificateur 11 est adapté pour fournir à sa sortie 11S une onde amplifiée dont la fréquence est sensiblement égale à la fréquence de l'onde injectée à son entrée 11E. L'amplificateur 11 est par exemple un amplificateur à fibre ou un amplificateur optique à semiconducteur (ou SOA, de l'anglais « Semiconductor Optical Amplifier »).

L'émetteur 12 est propre à modifier l'onde optique amplifiée injectée à son entrée 12E pour lui conférer des propriétés de phase spatiale et/ou d'amplitude spatiale et/ou de polarisation souhaitées par un utilisateur. Par exemple, l'émetteur 12 est propre à focaliser à une distance prédéterminée, appelée « portée » du dispositif de télédétection 4, l'onde optique amplifiée injectée à son entrée 12E.

L'étage de réception 8 comporte un récepteur 16 pour recevoir l'onde diffusée, un coupleur 18 pour faire interférer l'onde diffusée reçue avec une autre onde optique, et un premier détecteur 20, encore appelée « détecteur principal », pour détecter un signal optique d'interférence et générer un courant électrique qui est fonction du signal optique d'interférence.

Le récepteur 16 comporte une sortie 16S, reliée à une première entrée 18E1 du coupleur 18 par une fibre optique de réception 22. Le coupleur 18 comporte une deuxième entrée 18E2 reliée à la sortie 9S de la source laser 9 par une fibre optique 23, dite « fibre d'oscillateur local », adaptée pour acheminer une partie de l'onde optique en sortie de la source laser 9 vers la deuxième entrée 18E2 du coupleur optique 18.

La première fibre optique de réception 22 est préférentiellement une fibre à maintien de polarisation, avantageusement une fibre monomode à maintien de polarisation. En outre, la fibre d'oscillateur local 23 est préférentiellement une fibre à maintien de polarisation, avantageusement une fibre monomode à maintien de polarisation.

En variante, la fibre d'oscillateur local 23 relie la deuxième entrée 18E2 du coupleur 18 à la sortie 11S de l'amplificateur 11 pour acheminer une partie de l'onde optique amplifiée en sortie de l'amplificateur 11 vers la deuxième entrée 18E2.

Le coupleur 18 comporte en outre une première sortie 18S1, reliée à une entrée 20E du détecteur 20, et une deuxième sortie 18S2, non reliée sur cette figure.

Le récepteur 16 est propre à modifier l'onde diffusée reçue pour fournir à sa sortie 16S une onde optique possédant des propriétés de phase spatiale et/ou d'amplitude spatiale et/ou de polarisation souhaitées par un utilisateur.

Le coupleur 18 possède par exemple un facteur de couplage égal à 3 dB, c'est-à-dire que le coupleur 18 est propre à fournir à chacune de ses sorties 18S1, 18S2 une onde optique égale à la moitié de la somme de l'onde optique injectée à sa première entrée 18E1, et de l'onde optique injectée à sa deuxième entrée 18E2.

Le détecteur principal 20 est propre à fournir à sa sortie 20S un signal électrique, encore appelé « signal à démoduler », qui dépend du signal optique appliqué à son entrée 20E par la première sortie 18S1, avantageusement un signal électrique proportionnel à la puissance optique du signal optique appliqué à son entrée 20E.

Le détecteur principal 20 est, par exemple, une photodiode ou un photomultiplicateur.

Le dispositif de traitement 6 comporte un interféromètre 24 pour fournir un signal optique de référence à partir d'une partie de l'onde optique générée par la source laser 9, un deuxième détecteur 26, encore appelé « détecteur de démodulation » pour détecter le signal optique de référence et générer un signal électrique, encore appelé « signal de référence », qui est fonction de l'onde optique de référence, et une unité de traitement 28 pour traiter le signal de référence.

L'interféromètre 24 comporte une entrée 24E, reliée par une fibre optique 29, encore appelée « fibre de démodulation », à la sortie 9S de la source laser 9, et une sortie 24S reliée à une entrée 26E du détecteur de démodulation 26. Le détecteur de démodulation 26 comporte en outre une sortie 26S, reliée à une première entrée 28E1 de l'unité de traitement 28. L'unité de traitement 28 comporte en outre une entrée de démodulation 28E2 reliée à la sortie 20S sortie du détecteur principal 20.

La fibre de démodulation 29 est préférentiellement une fibre à maintien de polarisation, avantageusement une fibre monomode à maintien de polarisation.

L'interféromètre 24 comporte un premier bras 30 et un deuxième bras 32 de longueurs distinctes.

Le deuxième bras 32 comporte une ligne à retard 33 comportant une entrée 33E et une sortie 33S. La ligne à retard 33 est propre à fournir à sa sortie 33S un signal retardé d'un retard temporel $T_0$ par rapport à un signal appliqué à son entrée 33E.

La ligne à retard 33 est par exemple une fibre optique, préférentiellement une fibre monomode, avantageusement une fibre monomode à maintien de polarisation.

La longueur de la ligne à retard 33 est de préférence inférieure ou égale à la portée du dispositif de télédétection 4, avantageusement inférieure au cinquième de la portée, par exemple inférieure au dixième de la portée. Par exemple, la longueur de la ligne à retard 33 est inférieure à 40 mètres, avantageusement inférieure à 20 mètres, par exemple inférieure à 10 mètres.

De préférence, l'interféromètre 24 est tel qu'une onde optique injectée à son entrée 24E se divise en deux ondes optiques : une première onde optique circulant dans le premier bras 30 et une deuxième onde optique circulant dans le deuxième bras 32. La puissance optique de la deuxième onde optique est comprise entre 45% et 55% de la puissance optique de la première onde optique, préférentiellement égale.

L'interféromètre 24 est par exemple un interféromètre de Mach-Zehnder.

L'unité de traitement 28 comprend un système d'acquisition 34 comportant deux entrées qui sont les entrées 28E1, 28E2 de l'unité de traitement 28, une mémoire 36 et un calculateur 38. L'unité de traitement comporte en outre des moyens de saisie 40.

Le système d'acquisition 34 de l'unité de traitement 28 est adapté pour échantillonner chacun des signaux électriques appliqués à ses entrées 28E1, 28E2. Le système d'acquisition 34 est également adapté pour transmettre les signaux échantillonnés à la mémoire 36.

La mémoire 36 est adaptée pour stocker les signaux échantillonnés par le système d'acquisition 34.

Le calculateur 38 est adapté pour traiter les données stockées dans la mémoire 36, par exemple traiter les données en fonction d'instructions saisies par un utilisateur par l'intermédiaire des moyens de saisie 40. En particulier, le calculateur 38 est adapté pour calculer un signal de démodulation à partir du signal appliqué à la première entrée 28E1 de l'unité de traitement 28, et pour démoduler le signal à démoduler, appliqué à l'entrée de démodulation 28E2 de l'unité de traitement 28, par le signal de démodulation calculé.

Avantageusement, le calculateur 38 est adapté pour se synchroniser sur l'unité de pilotage de la source laser 9. Par exemple, le calculateur 38 est adapté pour traiter séparément les signaux reçus durant la partie croissante de la

**EP 2 940 522 B1**

modulation en dent de scie et les signaux reçus durant la partie décroissante de cette modulation.

Le fonctionnement du système de détection 2 va maintenant être décrit en regard des figures 1, 2, 3 et 4.

La source laser 9 émet une onde optique dont la fréquence est commandée par l'unité de pilotage. Toutefois, la phase de l'onde optique fluctue au cours du temps.

Une première partie de l'onde optique émise par la source laser 9 se propage dans la première fibre optique 10 jusqu'à l'amplificateur 11.

En outre, une deuxième partie de l'onde émise par la source laser 9, encore appelée « oscillateur local », se propage dans la fibre d'oscillateur local 23 jusqu'à la deuxième entrée 18E2 du mélangeur 18.

En outre, une troisième partie de l'onde émise par la source laser 9, dite « onde prélevée », se propage dans la fibre de démodulation 29 jusqu'à l'interféromètre 24.

L'amplificateur 11 amplifie la première partie de l'onde émise par la source laser 9 et fournit à sa sortie 11S une onde optique amplifiée.

L'émetteur 12 émet l'onde amplifiée en direction de la cible 3.

La cible 3 diffuse l'onde amplifiée émise par l'émetteur 12. Le spectre de l'onde diffusée présente des propriétés représentatives de paramètres physiques de la cible 3 tels que sa position ou sa vitesse.

En effet, le décalage temporel entre les motifs en dents de scie de l'onde émise et les motifs en dents de scie de l'onde diffusée est proportionnel à la distance à laquelle se trouve la cible 3.

En effet, le décalage fréquentiel entre les maxima des motifs en dents de scie de l'onde émise et les maxima des motifs en dents de scie de l'onde diffusée est proportionnel à la vitesse de la cible 3.

Le récepteur 16 capte une partie de l'onde diffusée par la cible 3. L'onde captée injectée dans la première entrée 18E1 du coupleur 18 via la fibre de réception 22.

Le coupleur 18 fournit à sa sortie une onde optique par exemple égale à la moitié de la somme de l'onde injectée dans la première entrée du coupleur 18 par la fibre d'oscillateur local 23 et de l'onde reçue injectée dans la deuxième entrée du coupleur 18 par la fibre de réception 22. L'onde optique disponible à la sortie du coupleur 18 est donc un signal optique d'interférence entre les ondes injectées à la première et à la deuxième entrées 18E1, 18E2 du coupleur 18.

Le détecteur principal 20 détecte le signal optique d'interférence et fournit à sa sortie un signal réel, encore appelé « signal à démoduler », qui est proportionnel au module au carré du signal optique d'interférence injecté à l'entrée du détecteur 20.

Le signal à démoduler est appliqué à la deuxième entrée de l'unité de traitement 28. Le signal à démoduler est acquis et échantillonné par le système d'acquisition 34 pour être enregistré dans la mémoire 36.

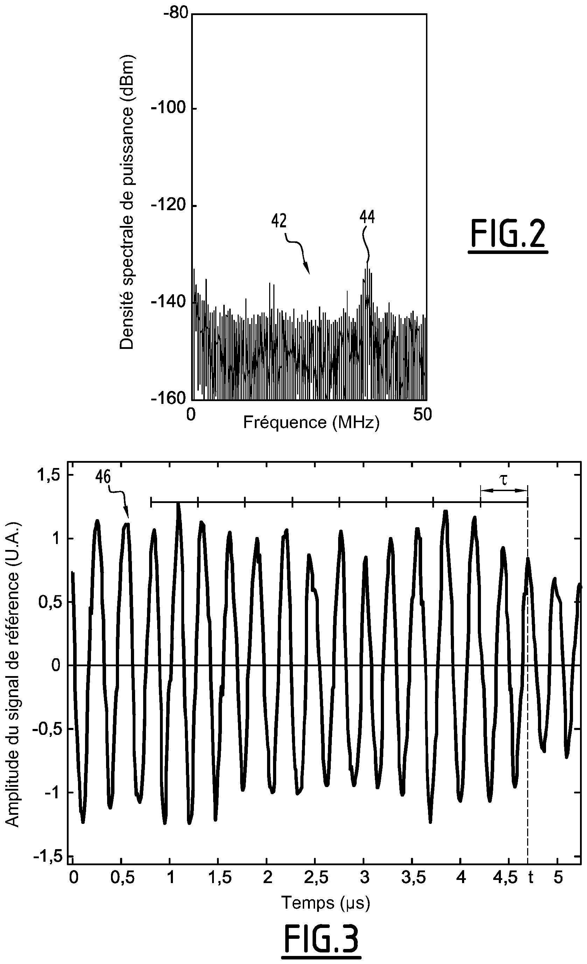

Le signal à démoduler présente un spectre 42, représenté sur la figure 2. Le spectre 42 comporte un pic d'intérêt 44, de fréquence centrale égale à 37,3 MHz, d'amplitude égale à -132 dBm/Hz et de largeur à mi-hauteur égale à 1,7 MHz, avec un rapport signal sur bruit égal à 11 dB.

Le spectre 42 est obtenu par émission d'une onde optique de puissance optique égale à 200 mW vers une cible 3 présentant un albédo égal à 12% et distante de 125 m, après application à la source laser 9 d'une modulation de fréquence linéaire de pente égale à 45 MHz/$\mu$s.

Au sens de la présente invention, une puissance P, en watt, s'exprime en dBm selon la formule: $P(dBm) = 10 \log[P(mW)/1 \, mW]$, log étant l'opérateur logarithme décimal.

Le pic d'intérêt 44 ne possède pas une finesse et un rapport signal sur bruit suffisants pour assurer une estimation précise de sa fréquence centrale. Une estimation précise de la fréquence centrale du pic d'intérêt 44 conduit alors à une estimation précise de la vitesse et/ou de la distance de la cible 3.

L'onde prélevée est injectée à l'entrée 24E de l'interféromètre 24. Une première partie de l'onde prélevée se propage dans le premier bras 30 de l'interféromètre 24. Une deuxième partie de l'onde prélevée se propage dans le deuxième bras 32 de l'interféromètre 24, notamment dans la ligne à retard 33.

L'interféromètre 24 fournit à sa sortie 24S un signal optique de battement, dit « onde de battement ». L'onde de battement résulte de l'interférence entre la première partie de l'onde prélevée et la deuxième partie de l'onde prélevée, retardée du retard $T_0$ induit par la ligne à retard 33.

Le détecteur de démodulation 26 détecte l'onde de battement et fournit à sa sortie un signal réel 46, encore appelé « signal de référence », visible sur la figure 3 et qui est proportionnel au module au carré de l'onde de battement injectée à l'entrée du détecteur de démodulation 26.

Le signal de référence 46 est appliqué à la première entrée de l'unité de traitement 28. Le signal de référence 46 est acquis et échantillonné par le système d'acquisition 34 pour être enregistré dans la mémoire 36.

Un utilisateur choisit un nombre entier strictement positif K et le saisit via les moyens de saisie 40.

Le calculateur 38 calcule alors un signal de référence complexe à partir du signal de référence réel 46.

Le calculateur 38 calcule d'abord la transformée de Fourier du signal de référence réel 46. Puis le calculateur 38 calcule un signal intermédiaire, obtenu en annulant certaines composantes de la transformée de Fourier du signal de référence. De préférence, le calculateur 38 annule des composantes dont les fréquences sont de même signe. Par exemple, le calculateur 38 calcule le signal intermédiaire en annulant les composantes de fréquence négative de la transformée de Fourier du signal de référence. Le calculateur 38 calcule enfin le signal de référence complexe, qui est égal à la transformée de Fourier inverse du signal intermédiaire.

Le signal de référence complexe est appelé représentation analytique du signal.

En variante, le signal de référence complexe est obtenu en calculant d'abord, dans le calculateur 38, la transformée de Hilbert, classiquement connue, du signal de référence réel 46, puis en additionnant au signal de référence réel 46 sa transformée de Hilbert précédemment calculée.

De préférence, lors du calcul du signal intermédiaire, le calculateur 38 annule également la composante de fréquence nulle de la transformée de Fourier du signal de référence réel.

Le signal de référence est alors proportionnel au signal complexe $S_0(t)$ de module unitaire suivant :

$$S_0(t) = \exp[i\{\varphi(t) - \varphi(t - \tau_0)\}]$$

où est la phase de l'onde émise par la source laser 9 et $T_0$ le retard entre le premier bras 30 et le deuxième bras 32 de l'interféromètre 24, ou proportionnel au conjugué de S(t).

Le calculateur 38 crée ensuite K+1 signaux de transition $S_p$, chaque signal de transition $S_p$ étant défini sur l'intervalle temporel [0 ; $\tau_0$] et s'écrivant :

$$S_p(t) = S_0(t - p\tau_0) = \exp[i\{\varphi(t - p\tau_0) - \varphi(t - (p + 1)\tau_0)\}]$$

Ainsi, le calculateur 38 a créé :

$$S_0(t) = \exp[i\{\varphi(t) - \varphi(t - \tau_0)\}]$$

$$S_1(t) = \exp[i\{\varphi(t - \tau_0) - \varphi(t - 2\tau_0)\}]$$

$$\ldots$$

$$S_p(t) = \exp[i\{\varphi(t - p\tau_0) - \varphi(t - (p + 1)\tau_0)\}]$$

$$\ldots$$

$$S_K(t) = \exp[i\{\varphi(t - K\tau_0) - \varphi(t - (K + 1)\tau_0)\}]$$

Le calculateur 32 calcule ensuite un signal de démodulation $P_d$ égal au produit des K+1 signaux de transition.

Dans l'exponentielle complexe, tous les termes en $\varphi(t-\rho\tau_0)$, avec p un nombre entier quelconque compris entre 0 et K+1, s'annulent, à l'exception de $\varphi(t)$ et $\varphi(t-(K+1)\tau_0)$ :

$$P_d(t) = \prod_{p=0}^{K} S_p(t) = \exp[i\{\varphi(t) - \varphi(t - (K + 1)\tau_0)\}]$$

L'expression du signal de démodulation $P_d$ est analogue à celle d'un signal de référence obtenu avec un interféromètre dont le deuxième bras comporte une ligne à retard introduisant un retard $(K+1)\tau_0$ entre son entrée et sa sortie.

Le calculateur 38 calcule ensuite un signal démodulé égal au produit du signal à démoduler et du signal de démodulation $P_d$, ou encore au produit du signal à démoduler et du conjugué du signal de démodulation $P_d$.

L'utilisateur peut ajuster la valeur de l'entier positif K de sorte que le retard $(K+1)\tau_0$ induit par le signal de démodulation $P_d$ compense la décorrélation temporelle entre le signal diffusé collecté et l'oscillateur local, de façon à augmenter le rapport signal sur bruit et la finesse du pic d'intérêt 44.

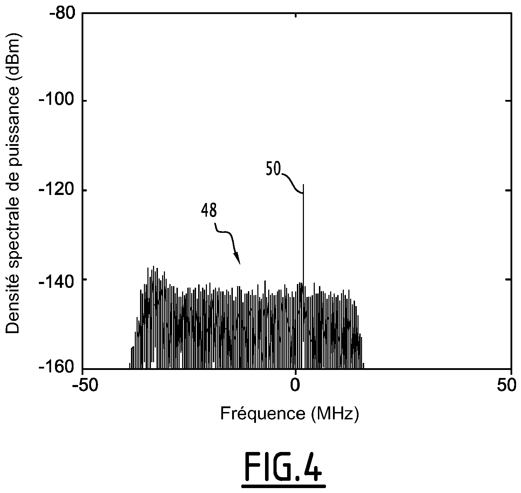

Le signal démodulé présente un spectre 48, représenté sur la figure 4. Le spectre 48 du signal démodulé comporte un pic d'intérêt 50, de fréquence centrale égale à 1,7 MHz, c'est-à-dire égale à la fréquence centrale du pic d'intérêt 44 du spectre 42 du signal à démoduler de laquelle a été retranché un premier décalage de fréquence lié à la propagation de l'onde du dispositif de télédétection 4 jusqu'à la cible 3, puis de la cible 3 jusqu'au dispositif de télédétection 4, et à laquelle a été ajouté un deuxième décalage de fréquence par effet Doppler lié à la vitesse de déplacement de la cible 3, ici égal à 0,2 m/s.

Le pic d'intérêt 50 du spectre 48 du signal démodulé présente une amplitude égale à -119 dBm, avec un rapport signal sur bruit égal à 24 dB, et une largeur à mi-hauteur inférieure à 200 kHz.

Le pic d'intérêt 50 possède une finesse et un rapport signal sur bruit suffisants pour assurer une estimation précise de la vitesse de la cible 3.

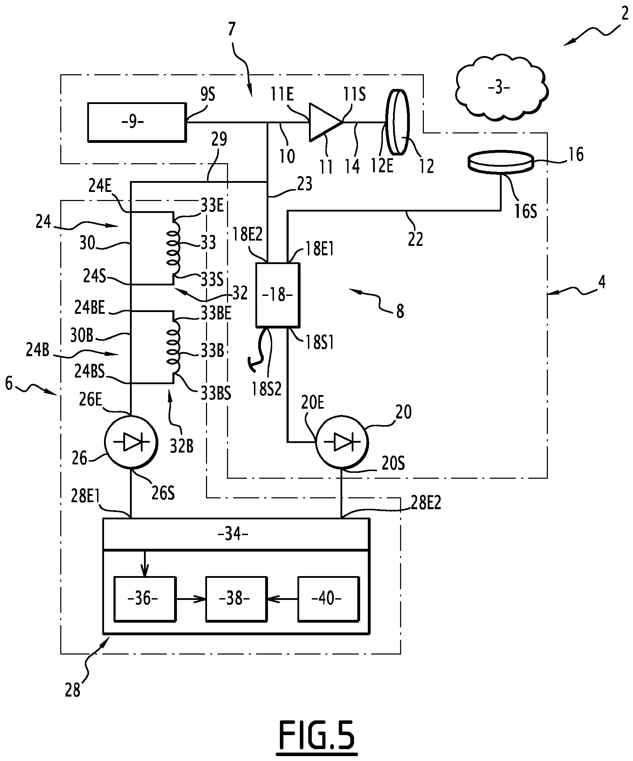

Selon un deuxième mode de réalisation du système de détection 2 selon l'invention, le dispositif de traitement 6 comporte un deuxième interféromètre 24B, comme cela apparaît sur la figure 5.

Le deuxième interféromètre 24B est par exemple un interféromètre de Mach-Zehnder.

Le deuxième interféromètre 24B comprend une entrée 24BE, reliée à la sortie 24S du premier interféromètre 24, et une sortie 24BS reliée à l'entrée 26E du détecteur de démodulation 26.

Le deuxième interféromètre 24B comporte un premier bras 30B et un deuxième bras 32B de longueurs distinctes.

Le deuxième bras 32B comporte une deuxième ligne à retard 33B comportant une entrée 33BE et une sortie 33BS. La deuxième ligne à retard 33B est propre à fournir à sa sortie 33BS un signal retardé d'un deuxième retard temporel $\tau_1$ par rapport à un signal appliqué à son entrée 33BE.

La deuxième ligne à retard 33B est par exemple une fibre optique, préférentiellement une fibre à maintien de polarisation, avantageusement une fibre monomode à maintien de polarisation.

La longueur de la deuxième ligne à retard 33B est différente de la longueur de la ligne à retard 33. De préférence, le rapport entre le premier retard $\tau_0$ et le deuxième retard $\tau_1$ est supérieur à 5, de préférence supérieur à 10, par exemple supérieur à 20.

De préférence, chaque interféromètre 24, 24B est tel qu'une onde optique injectée à l'entrée 24E, 24BE de l'interféromètre 24, 24B se divise en une première onde optique circulant dans le premier bras 30, 30B et une deuxième onde optique circulant dans le deuxième bras 32, 32B. La puissance optique de la deuxième onde optique est supérieure à la puissance optique de la première onde optique, avantageusement deux fois supérieure, de préférence cinq fois supérieure, par exemple dix fois supérieure.

En fonctionnement, le premier interféromètre 24 fournit à sa sortie 24S un premier signal optique de battement résultant de l'interférence entre la première partie de l'onde prélevée et la deuxième partie de l'onde prélevée, retardée du retard $\tau_0$ induit par la ligne à retard 33.

A la différence du mode de réalisation décrit précédemment, le premier signal optique de battement est ensuite injecté à l'entrée 24BE du deuxième interféromètre 24B. Une première partie du premier signal optique de battement se propage dans le premier bras 30B du deuxième interféromètre 24B. Une deuxième partie du premier signal optique de battement se propage dans le deuxième bras 32B du deuxième interféromètre 24B, notamment dans la deuxième ligne à retard 33B.

Le deuxième interféromètre 24B fournit à sa sortie 24BS un deuxième signal optique de battement résultant de l'interférence entre la première partie du premier signal optique de battement et la deuxième partie de la première onde optique de battement, retardée du retard $\tau_1$ induit par la deuxième ligne à retard 33B.

Le détecteur de démodulation 26 détecte le deuxième signal optique de battement et fournit à sa sortie le signal de référence. Le signal de référence est un signal électrique proportionnel au module au carré du deuxième signal optique de battement injecté à l'entrée du détecteur de démodulation 26.

L'utilisateur choisit un premier et un deuxième nombres entiers positifs $K_1$, $K_2$ dont l'un au moins est non nul, et les saisit via les moyens de saisie 40.

Le calculateur 38 crée ensuite $(K_1+1)$ premiers signaux de transition $S_{1,p}$ et $(K_2+1)$ deuxièmes signaux de transition $S_{2,r}$.

Les premiers signaux de transition $S_{1,p}$ sont définis comme les signaux de transition $S_p$ décrits précédemment.

Chaque deuxième signal de transition $S_{2,r}$ est défini sur l'intervalle temporel $[0 ; \tau_1]$ et s'écrit :

$$S_{2,r}(t) = S_0(t - r\tau_1) = \exp[i\{\varphi(t - r\tau_1) - \varphi(t - (r+1)\tau_1)\}]$$

$S_0$ étant le signal de référence défini précédemment.

Le calculateur 32 calcule ensuite un premier signal de démodulation $P_{1,d}$ égal au produit des $(K_1+1)$ premiers signaux de transition, et un deuxième signal de démodulation $P_{2,d}$ égal au produit des $(K_2+1)$ deuxièmes signaux de transition :

$$P_{1,d}(t) = \prod_{p=0}^{K_1} S_{1,p}(t) = \exp[i\{\varphi(t) - \varphi(t - (K_1 + 1)\tau_0)\}]$$

$$P_{2,d}(t) = \prod_{r=0}^{K_2} S_{2,r}(t) = \exp[i\{\varphi(t) - \varphi(t - (K_2 + 1)\tau_1)\}]$$

Le calculateur 38 calcule ensuite le signal démodulé égal au produit du signal à démoduler par le premier signal de démodulation $P_{1,d}$, ou par son conjugué, puis par le deuxième signal de démodulation $P_{2,d}$ ou par son conjugué, selon le choix de l'utilisateur.

Ces démodulations successives peuvent s'interpréter comme l'introduction d'un retard total égal à $[\pm(K_1+1)\tau_0 + \pm(K_2+1)\tau_1]$ dans l'oscillateur local avant son injection à la deuxième entrée 18E2 du coupleur 18. L'utilisateur peut ajuster la valeur des entiers $K_1$, $K_2$ de sorte que le retard total $[\pm(K_1+1)\tau_0 + \pm(K_2+1)\tau_1]$ soit aussi proche que possible du temps T de propagation des ondes depuis l'émetteur 12 jusqu'à la cible 3, puis depuis la cible 3 jusqu'au récepteur 16. La démodulation par le conjugué du signal de démodulation $P_{1,d}$, $P_{2,d}$ revient à introduire un retard négatif.

Ceci a pour effet de compenser la décorrélation temporelle entre l'oscillateur local et le signal diffusé collecté, qui est retardé de T par rapport à l'oscillateur local.

Les retards $\tau_0$, $\tau_1$ étant différents, de préférence dans un rapport du premier retard $\tau_0$ sur le deuxième retard $\tau_1$ supérieur à 5, l'utilisateur peut d'abord choisir la valeur de l'entier correspondant au plus grand retard parmi les deux retards $\tau_0$ et $\tau_1$ pour approcher grossièrement le temps total de propagation T, puis choisir la valeur de $K_2$ pour approcher plus finement le temps total de propagation T après que la valeur de K1 a été choisie.

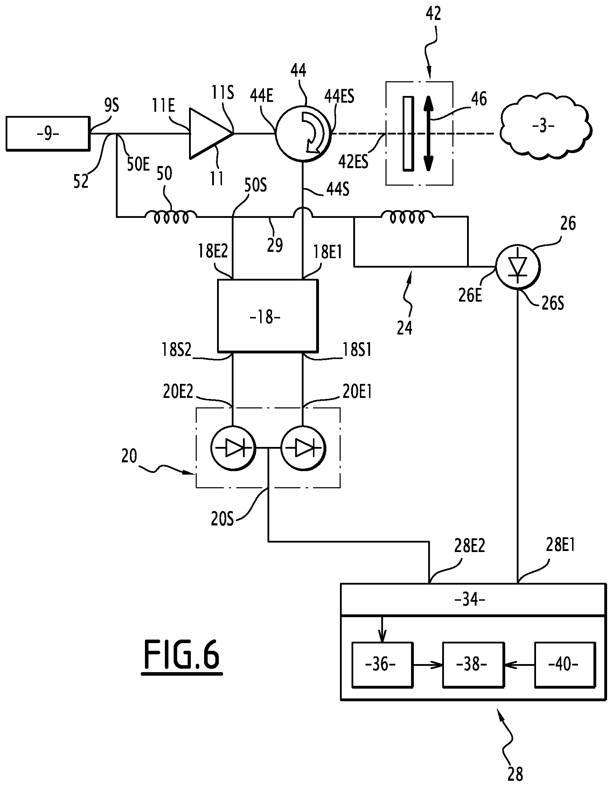

Selon un troisième mode de réalisation du système de détection 2 selon l'invention, l'émetteur 12 et le récepteur 16 sont confondus en un émetteur-récepteur 42, comme cela apparaît sur la figure 6.

L'émetteur-récepteur 42 est adapté pour émettre une onde électromagnétique vers la cible 3. L'émetteur-récepteur 42 est également adapté pour recevoir au moins une partie de l'onde électromagnétique diffusée par la cible 3.

L'émetteur-récepteur 42 comporte une entrée-sortie 42ES.

Le dispositif de télédétection 4 comporte alors un circulateur 44. Le circulateur 44 comporte une entrée 44E, une sortie 44S et une entrée-sortie 44ES. Le circulateur 44 est propre à acheminer une onde optique injectée à son entrée 44E vers son entrée-sortie 44ES. En outre, le circulateur 44 est propre à acheminer une onde optique injectée à son entrée-sortie 44ES vers sa sortie 44S.

L'entrée-sortie 44ES du circulateur 44 est reliée à l'entrée-sortie 42ES de l'émetteur-récepteur 42.

L'émetteur-récepteur 42 comporte par exemple une lentille 46 en série avec une lame quart d'onde 48.

La lentille 46 est par exemple une lentille convergente.

Le circulateur 44 est par exemple un circulateur fibré ou un ensemble formé par un cube polariseur, un séparateur de polarisation et une lame d'onde.

En outre, la fibre d'oscillateur local est remplacée par une ligne à retard de compensation 50, comprenant une entrée 50E et une sortie 50S.

La ligne à retard de compensation 50 est reliée à la sortie 9S de la source laser 9 en un point de connexion 52. La sortie 50S de la ligne à retard de compensation 50 est reliée à l'entrée 24E de l'interféromètre 24. La sortie 50S est en outre reliée à la deuxième entrée 18E2 du coupleur 18.

La ligne à retard de compensation 50 induit un retard R prédéterminé entre un signal injectée à son entrée 50E et un signal émergeant de sa sortie 50S. Le retard R est choisi égal au temps total de propagation d'une onde du point de connexion 52 à l'émetteur-récepteur 42, puis de l'émetteur-récepteur 42 à la première entrée 18E1 du coupleur.

Le retard R permet une compensation préliminaire, sans calcul par l'unité de traitement 28, de la décorrélation entre l'oscillateur local et le signal collecté par le dispositif de télédétection 4. Une telle compensation permet à utilisateur, pour un retard $\tau_0$ donné de l'interféromètre 24, de réduire la valeur de l'entier K qui conduit à un affinement recherché des pics d'intérêts 44. Ceci a pour conséquence de réduire les temps de calcul du calculateur 38.

Comme cela apparaît sur la figure, le détecteur 20 du dispositif de télédétection 4 est un détecteur balancé. Le détecteur 20 comprend une première entrée 20E1, une deuxième entrée 20E2 et une sortie 20S. La première entrée 20E1 est reliée à la première sortie 18S1 du coupleur 18. La deuxième entrée 20E2 est reliée à la deuxième sortie 18S2 du coupleur 18.

Le détecteur balancé 20 est par exemple constitué de deux photodiodes de caractéristiques physiques similaires, montées en antiparallèle.

En variante, l'oscillateur local est prélevé en sortie de l'amplificateur 11, le point de connexion 52 se situant alors en aval de l'amplificateur 11.

En variante, le dispositif de traitement 6 comporte N interféromètres, N étant un entier naturel strictement supérieur à 2. Les N interféromètres sont alors disposés successivement, la sortie d'un interféromètre étant reliée à la sortie de l'interféromètre suivant.

Chaque interféromètre comporte un premier bras et un deuxième bras. Le deuxième bras comporte une ligne à retard. La ligne à retard du j-ième interféromètre, j étant un nombre entier compris entre 2 et N, comprend une entrée et une sortie, et induit un retard $\tau_j$ prédéterminé entre un signal injecté à son entrée et un signal émergeant de sa sortie.

Les retards $\tau_j$ induits par les interféromètres sont, de préférence, deux à deux distincts.

L'utilisateur saisit N entiers naturels $K_1$, $K_2$, ..., $K_i$, ..., $K_N$ dont l'un au moins est non nul. Chaque entier naturel saisi par l'utilisateur est associé à un interféromètre distinct. Le calculateur 38 calcule alors N signaux de démodulation.

Pour un entier naturel i quelconque pris entre 1 et N, le signal de démodulation $P_{i,d}$ correspondant s'écrit :

$$P_{j,d}(t) = \prod_{p=0}^{K_i} \exp\left[i\left\{\varphi\left(t - p\tau_j\right) - \varphi\left(t - (p+1)\tau_j\right)\right\}\right]$$

$$= \exp\left[i\left\{\varphi(t) - \varphi\left(t - \left(K_j + 1\right)\tau_j\right)\right\}\right]$$

où $K_j$ est l'entier saisi par l'opérateur associé au j-ième interféromètre, et $\tau_j$ le retard induit par la ligne à retard du j-ième interféromètre.

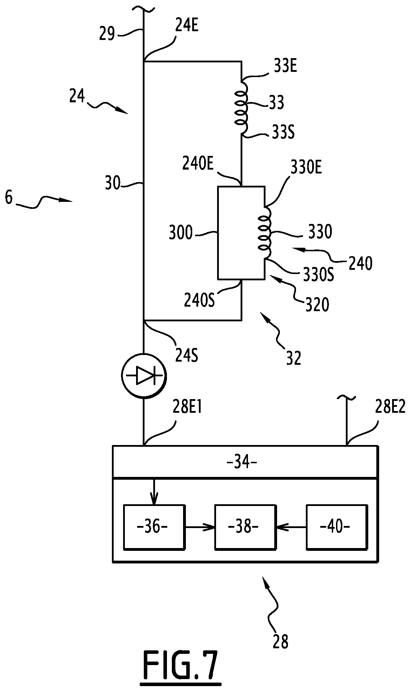

Selon un quatrième mode de réalisation du système de détection selon l'invention, dont une partie est représentée sur la figure 7, le dispositif de traitement 6 comporte au moins deux interféromètres imbriqués.

Par « deux interféromètres imbriqués », il est entendu un premier interféromètre 24 et un deuxième interféromètre 240, tels que l'un des bras 30, 32 du premier interféromètre 24 comporte le deuxième interféromètre 240.

Par exemple, le premier interféromètre est l'interféromètre 24 tel que décrit au regard de la figure 5.

Le deuxième interféromètre 240 est par exemple un interféromètre de Mach-Zehnder.

Dans l'exemple, le deuxième bras 32 du premier interféromètre 24 comporte le deuxième interféromètre 240, en série avec la ligne à retard 33. Le deuxième interféromètre 240 comprend une entrée 240E, reliée à la sortie 33S de la ligne à retard 33. L'interféromètre 240 comporte en outre une sortie 240S reliée à la sortie 24S du premier interféromètre 24.

Le deuxième interféromètre 240 comporte un premier bras 300 et un deuxième bras 320 de longueurs distinctes.

Le deuxième bras 320 du deuxième interféromètre 240 comprend une ligne à retard 330 comportant une entrée 330E et une sortie 330S. La ligne à retard 330 est propre à fournir à sa sortie 330S un signal retardé d'un retard temporel $\tau'_1$ par rapport à un signal appliqué à son entrée 330E.

La ligne à retard 330 du deuxième interféromètre 240 est, par exemple, une fibre optique, préférentiellement une fibre monomode, avantageusement une fibre monomode à maintien de polarisation.

La longueur de la ligne à retard 330 du deuxième interféromètre 240 est, de préférence, inférieure ou égale à la portée du dispositif de télédétection 4, avantageusement inférieure au cinquième de la portée, par exemple inférieure au dixième de la portée. Par exemple, la longueur de la ligne à retard 330 est inférieure à 40 mètres, avantageusement inférieure à 20 mètres, par exemple inférieure à 10 mètres.

Avantageusement, la longueur de la ligne à retard 330 est différente de la longueur de la ligne à retard 33. De préférence, le rapport entre le plus grand parmi le retard $T_0$ de la ligne à retard 33 du premier interféromètre 24 et le retard $\tau'_1$ de la ligne à retard 330 du deuxième interféromètre 240, et le plus petit parmi ces retards $\tau_0$, $\tau'_1$, est supérieur à 2, de préférence supérieur à 5, par exemple supérieur à 10.

De préférence, le deuxième interféromètre 240 est tel qu'une onde optique injectée à son entrée 240E se divise en deux ondes optiques : une première onde optique circulant dans le premier bras 300 et une deuxième onde optique circulant dans le deuxième bras 320. La puissance optique de la deuxième onde optique est alors supérieure à la puissance optique de la première onde optique, avantageusement deux fois supérieure, de préférence cinq fois supérieure, par exemple dix fois supérieure.

En fonctionnement, l'onde prélevée est acheminée par la fibre de démodulation 29 depuis la source laser 9. L'onde prélevée est injectée à l'entrée 24E de l'interféromètre 24. Une première partie de l'onde prélevée se propage dans le premier bras 30 de l'interféromètre 24. Une deuxième partie de l'onde prélevée se propage dans le deuxième bras 32 de l'interféromètre 24. Notamment, la deuxième partie de l'onde prélevée se propage dans la ligne à retard 33 pour former une onde retardée. L'onde retardée est ensuite injectée à l'entrée 240E du deuxième interféromètre 240.

Une première partie de l'onde retardée se propage dans le premier bras 300 du deuxième interféromètre 240. Une deuxième partie de l'onde retardée se propage dans le deuxième bras 320 du deuxième interféromètre 240. Notamment, la deuxième partie de l'onde retardée se propage dans la ligne à retard 330.

Le deuxième interféromètre 240 fournit à sa sortie 240S un premier signal optique de battement résultant de l'interférence entre la première partie de l'onde retardée et la deuxième partie de l'onde retardée, retardée du retard $\tau'_1$ induit par la ligne à retard 330.

Le premier signal optique de battement se propage ensuite jusqu'à la sortie 24S du premier interféromètre 24.

Le premier interféromètre 24 fournit alors à sa sortie 24S un deuxième signal optique de battement résultant de l'interférence entre le premier signal optique de battement et la première partie de l'onde prélevée qui s'est propagée dans le premier bras 30 du premier interféromètre 24.

Le détecteur de démodulation 26 détecte le deuxième signal optique de battement et fournit à sa sortie le signal de référence. Le signal de référence est un signal électrique proportionnel au module au carré du deuxième signal optique de battement injecté à l'entrée du détecteur de démodulation 26.

L'utilisateur choisit un premier et un deuxième nombres entiers positifs $P_1$, $P_2$ dont l'un au moins est non nul, et les saisit via les moyens de saisie 40.

Le fonctionnement du dispositif de traitement 6 représenté sur la figure 7 est ensuite similaire au fonctionnement du dispositif de traitement 6 représenté sur la figure 5, le retard $\tau'_1$ remplaçant le retard $\tau_1$. En effet, le deuxième interféromètre 240 a un rôle similaire au rôle du deuxième interféromètre 24B du dispositif de traitement 6 représenté sur la figure 5.

En variante, le deuxième interféromètre 240 est disposé entre l'entrée 24E du premier interféromètre 24 et l'entrée 33E la ligne à retard 33. L'entrée 240E du deuxième interféromètre 240 est alors reliée à l'entrée 24E du premier interféromètre 24, et la sortie 240S du deuxième interféromètre 240 est reliée à l'entrée 33E de la ligne à retard 33.

En variante, le premier bras 30 du premier interféromètre 24 comporte le deuxième interféromètre 240.

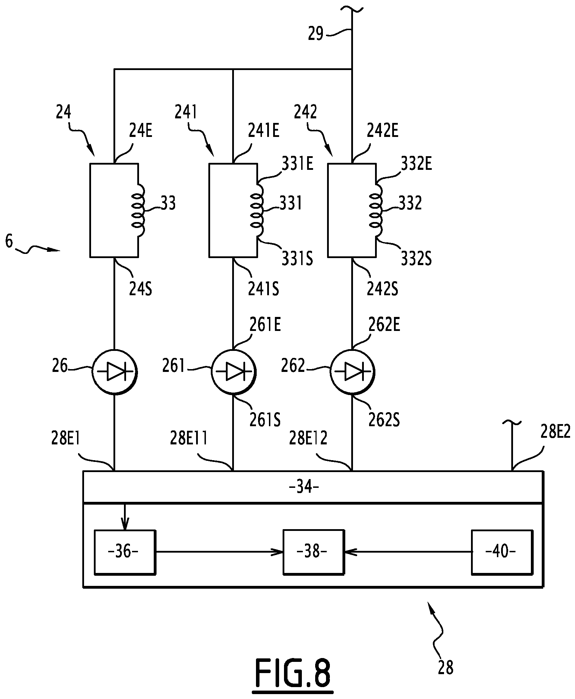

Selon un cinquième mode de réalisation du système de détection selon l'invention dont une partie est représentée sur la figure 8, le dispositif de traitement 6 comporte au moins deux d'interféromètres en parallèle, par exemple trois interféromètres en parallèle.

Le dispositif de traitement 6 comporte un premier interféromètre 24, tel que décrit au regard de la figure 1, un deuxième interféromètre 241 et un troisième interféromètre 242. Le dispositif de traitement 6 comporte également un premier détecteur 26, tel que décrit au regard de la figure 1, un deuxième détecteur 261 et un troisième détecteur 262.

Avantageusement, les deuxième et troisième détecteurs 261, 262 sont similaires au premier détecteur 26.

Le deuxième et le troisième interféromètres 241, 242 présentent une structure similaire à la structure du premier interféromètre 24.

Le deuxième et le troisième interféromètres 241, 242 comportent respectivement une deuxième ligne à retard 331 et une troisième ligne à retard 332.

La deuxième ligne à retard 331 comporte une entrée 331E et une sortie 331S. La troisième ligne à retard 332 comporte une entrée 332E et une sortie 332S.

La deuxième ligne à retard 331 est propre à fournir à sa sortie 331S un signal retardé d'un retard temporel $\tau^*_1$ par rapport à un signal appliqué à son entrée 331E.

La troisième ligne à retard 332 est propre à fournir à sa sortie 332S un signal retardé d'un retard temporel $\tau^*_2$ par rapport à un signal appliqué à son entrée 332E.

Avantageusement, les longueurs des lignes à retard 33, 331, 332 sont deux à deux différentes. De préférence, le rapport entre le plus grand parmi le retard $T_0$ de la ligne à retard 33, le retard $\tau^*_1$ de la deuxième ligne à retard 331 et le retard $\tau^*_2$ de la troisième ligne à retard 332, et le plus petit parmi ces retards $\tau_0$, $\tau^*_1$, $\tau^*_2$, est supérieur à 2, de préférence supérieur à 5, par exemple supérieur à 10.

Le deuxième interféromètre 241 comprend une entrée 241E, reliée à la fibre de démodulation 29. Le deuxième interféromètre 241 comporte en outre une sortie 241S reliée à une entrée 261E du deuxième détecteur 261.

Le troisième interféromètre 242 comprend une entrée 242E, reliée à la fibre de démodulation 29. Le deuxième interféromètre 242 comporte en outre une sortie 242S reliée à une entrée 262E du deuxième détecteur 262.

Outre la première entrée 28E1 et l'entrée de démodulation 28E2, l'unité de traitement 28 comporte une deuxième entrée 28E11 et une troisième entrée 28E12.

La deuxième entrée 28E11 est reliée à une sortie 261S du deuxième détecteur 261. La troisième entrée 28E12 est reliée à une sortie 262S du troisième détecteur 262.

En fonctionnement, l'onde prélevée est acheminée par la fibre de démodulation 29 depuis la source laser 9. L'onde prélevée est divisée en trois ondes : une première onde prélevée, une deuxième onde prélevée et une troisième onde prélevée. La première, la deuxième et la troisième ondes prélevées sont injectées à l'entrée 24E, 241E, 242E du premier, du deuxième et du troisième interféromètre 24, 241, 242 respectivement.

L'utilisateur choisit un premier, un deuxième et un troisième nombres entiers positifs $R_1$, $R_2$, $R_3$ dont l'un au moins est non nul, et les saisit via les moyens de saisie 40. Chaque nombre entier $R_1$, $R_2$, $R_3$ est associé à une ligne à retard 33, 331, 332.

Pour chaque interféromètre 24, 241, 242, le fonctionnement du dispositif de traitement 6 de la figure 8 est ensuite similaire au fonctionnement du dispositif de traitement de la figure 1. Pour chaque interféromètre 24, 241 ou 242, le calculateur 38 calcule un signal de référence, puis un signal de démodulation. Le calculateur 38 calcule ensuite le signal démodulé, qui est égal au produit successif du signal à démoduler par chaque signal de démodulation.

En variante, au moins un des interféromètres en parallèle est en série avec un autre interféromètre.

En variante, au moins un des interféromètres en parallèle comporte un interféromètre imbriqué.

Le recours à au moins un interféromètre dans un tel procédé de démodulation permet d'obtenir une mesure de la phase de l'onde générée par la source laser 9. Une telle mesure de la phase de l'onde générée permet une meilleure compensation des fluctuations temporelles de cette phase.

En outre, le recours à des ondes optiques dans un tel procédé de démodulation permet de générer des retards par exemple compris entre 10 ns et 500 $\mu$s. De tels retards sont propres à compenser des distances de propagation importantes des ondes depuis l'émetteur 12 jusqu'à la cible 3, puis depuis la cible 3 jusqu'au récepteur 16. Par exemple, de tels retards sont propres à compenser des distances de propagation comprises entre 3 m et 150km. De tels retards sont plus importants que les retards obtenus lors du recours à des ondes hyperfréquence.

En variante, l'onde électromagnétique émise par le système de détection 2 est une onde hyperfréquence.

Par « onde électromagnétique hyperfréquence », on entend une onde dont la fréquence est comprise entre 0,1 GHz et 10 THz.

Le dispositif de télédétection 4 est alors un dispositif de télédétection à technologie radar (de l'anglais « radio détection and ranging »).

Le dispositif de télédétection 4 comporte alors des composants propres à générer, à émettre, à recevoir, à faire interférer ou à détecter des ondes électromagnétiques hyperfréquence.

Notamment, l'étage d'émission 7 est propre à générer une onde hyperfréquence et à émettre l'onde hyperfréquence en direction de la cible 3.

Notamment, l'étage de réception 8 est propre à recevoir une onde hyperfréquence émise par la cible 3. L'étage de réception 8 est également propre à générer un signal d'interférence entre l'onde reçue et une partie de l'onde générée par l'étage d'émission 7. L'étage de réception 8 est en outre propre à détecter le signal d'interférence pour générer un signal à démoduler.

En outre, le dispositif de traitement 6 est propre à générer un signal de démodulation à partir d'une partie de l'onde hyperfréquence générée par l'étage d'émission 7, selon le procédé défini précédemment.

Notamment, le dispositif de traitement 6 comporte au moins un interféromètre comprenant un premier bras et un deuxième bras. Le deuxième bras comporte une ligne à retard, classiquement connue, pour induire un retard prédéterminé dans un signal hyperfréquence qui traverse la ligne à retard. Le signal interférométrique est par exemple obtenu avec un mélange électronique.

Les modes de fonctionnement et les modes de réalisation décrits ci-dessus sont aptes à être combinés les uns aux autres, totalement ou partiellement, pour donner lieu à d'autres modes de réalisation de l'invention. Notamment, le rapport entre le plus grand retard $\tau_0$, $\tau_1$, $\tau'_1$ $\tau^*_1$, $\tau^*_2$ introduit par une ligne à retard 33, 33B, 330, 331 ou 332 et le plus petit parmi ces retards $\tau_0$, $\tau_1$, $\tau'_1$, $\tau^*_1$, $\tau^*_2$ est de préférence supérieur à 5, de préférence supérieur à 10, par exemple supérieur à 20.

**Revendications**

1. Procédé de démodulation, comprenant les étapes de :

- fourniture d'un signal à démoduler par détection d'un signal d'interférence entre une partie d'une onde électromagnétique émise par un étage d'émission (7) vers une cible (3) et une onde diffusée par la cible (3) ;
- démodulation successive du signal à démoduler par M signaux de démodulation pour obtenir un signal démodulé, M étant un nombre entier strictement positif, le signal démodulé étant égal au produit successif du signal à démoduler avec M premiers signaux, chaque premier signal correspondant à un des M signaux de démodulation et étant égal au signal de démodulation considéré ou au conjugué du signal de démodulation considéré,

les signaux de démodulation étant obtenus par la mise en œuvre d'un procédé de génération de M signaux de démodulation comprenant les étapes de :

- fourniture de M signaux d'entrée, chaque signal d'entrée étant une partie de l'onde émise ;
- injection de chaque signal d'entrée dans un premier interféromètre (24, 241, 242) de M premiers interféromètres, chaque premier interféromètre (24, 241, 242) comportant :

- une entrée (24E, 241E, 242E) dans laquelle le signal d'entrée est injecté,

- un premier bras (30) et un deuxième bras (32), le deuxième bras (32) comprenant une première ligne à retard (33, 331, 332) introduisant un premier retard ($\tau_0$, $\tau^*_1$, $\tau^*_2$),
- une sortie (24S, 241S, 242S) par laquelle sort un signal d'interférence correspondant à l'interférence entre un signal issu du premier bras (30) et un signal issu du deuxième bras (32),

- détection de M signaux de sortie, chaque signal de sortie étant un signal dépendant du signal d'interférence obtenu en sortie (24S) de chaque premier interféromètre (24, 241, 242) ;
- choix de M nombres entiers positifs non tous nuls ($R_1$, $R_2$, $R_3$) correspondant chacun au premier retard ($\tau_0$, $\tau^*_1$, $\tau^*_2$) d'un premier interféromètre (24, 241, 242) ;
- calcul de M signaux de démodulation, le j-ième signal de démodulation étant le produit de $R_j$+1 fonctions $S_{j, p}$, j étant un entier variant de 1 à M, $R_j$ étant l'entier choisi qui correspond au premier retard ($\tau_0$, $\tau^*_1$ ; $\tau^*_2$) du j-ième premier interféromètre (24, 241, 242), la p-ième fonction étant égale à :

$$S_{j,p}(t) = \exp\left[i\{\varphi(t - p\tau_j) - \varphi(t - (p+1)\tau_j)\}\right]$$

où p est un entier compris entre 0 et $R_j$, $\tau_j$ est le premier retard introduit par la ligne à retard du j-ième premier interféromètre (24, 241, 242).

2. Procédé selon la revendication 1, dans lequel au moins un j-ième premier interféromètre est relié à N deuxièmes interféromètres (24B), N étant un nombre entier strictement positif, le m-ième deuxième interféromètre (24B), m étant un nombre entier compris entre 1 et N-1, comportant :

- une entrée (24BE),
- un premier bras (30B) et un deuxième bras (32B), le deuxième bras (32B) comprenant une m-ième ligne à retard (33B) introduisant un m-ième deuxième retard ($\tau_1$),
- une sortie (24BS) par laquelle sort un m-ième signal d'interférence correspondant à l'interférence entre un signal issu du premier bras (30B) et un signal issu du deuxième bras (32B) du m-ième deuxième interféromètre (24B), la sortie (24BS) du m-ième deuxième interféromètre (24B) étant reliée à l'entrée (24BE) du (m+1)-ième deuxième interféromètre (24B) ;

la sortie (24S) du premier interféromètre (24) étant reliée à l'entrée (24BE) du premier deuxième interféromètre (24B), le procédé comportant en outre les étapes de :

- détection du m-ième signal d'interférence obtenu en sortie (24BS) du N-ième deuxième interféromètre (24B) ;
- choix de N nombres entiers positifs non tous nuls ($K_1$, $K_2$, ..., $K_i$, ..., $K_N$) ;
- calcul de N signaux de démodulation, le m-ième signal de démodulation étant le produit de $K_m$+1 fonctions $S_{m, p}$, $K_m$ étant l'entier choisi qui correspond au retard ($\tau_0$, $\tau_1$ ; $\tau_i$) du m-ième troisième interféromètre (24, 24B), la p-ième fonction étant égale à :

$$S_{m,p}(t) = \exp\left[i\{\varphi(t - p\tau_m) - \varphi(t - (p+1)\tau_m)\}\right]$$

où p est un entier compris entre 0 et $K_m$.

3. Procédé selon la revendication 1 ou 2, dans lequel au moins un bras (30, 32) d'un interféromètre (24) comporte un troisième interféromètre (240), le troisième interféromètre (240) comprenant :

- une entrée (240E) dans laquelle est injectée une partie du signal d'entrée de l'interféromètre (24) ;
- un premier bras (300) et un deuxième bras (320), le deuxième bras (320) comprenant une ligne à retard (330) introduisant un troisième retard ($\tau'_1$) ;
- une sortie (240S) par laquelle sort un deuxième signal d'interférence correspondant à l'interférence entre un signal issu du premier bras (30) de l'interféromètre (24) et un signal issu du deuxième bras (32) de l'interféromètre (24) ;

et dans lequel le deuxième signal d'interférence est acheminé vers la sortie (24S) de l'interféromètre (24).

4. Procédé selon l'une quelconque des revendications précédentes, dans lequel le rapport entre le plus grand retard ($\tau_0$, $\tau_1$ ; $\tau'_1$ ; $\tau^*_1$, $\tau^*_2$) introduit par une ligne à retard (33, 33B ; 330 ; 331, 332) et le plus petit retard ($\tau_0$, $\tau_1$ ; $\tau'_1$ ; $\tau^*_1$, $\tau^*_2$) introduit par une autre ligne à retard (33, 33B ; 330 ; 331, 332) est de préférence supérieur à 5, de préférence supérieur à 10, par exemple supérieur à 20.

5. Procédé selon l'une quelconque des revendications précédentes, dans lequel le signal d'entrée provient d'un dispositif de télédétection (4) présentant une portée prédéterminée, et dans lequel au moins une ligne à retard (33, 33B ; 330 ; 331, 332) est une fibre optique dont la longueur est de préférence inférieure ou égale à la portée, avantageusement inférieure au cinquième de la portée, par exemple inférieure au dixième de la portée.

6. Utilisation du procédé de démodulation selon l'une quelconque des revendications 1 à 5 pour la détermination de la vitesse et de la position d'une cible.

7. Système de détection (2), en particulier lidar ou radar, comportant :

 - un étage (7) d'émission d'une onde électromagnétique vers une cible (3) ;
 - un étage (8) de réception d'une onde électromagnétique diffusée par la cible (3), l'étage (8) de réception étant propre à générer un signal d'interférence entre l'onde reçue et une partie de l'onde générée et à détecter le signal d'interférence pour générer un signal à démoduler ;
 - un dispositif (6) de génération de M signaux de démodulation, M étant un nombre entier strictement positif,

 le dispositif de génération de M signaux de démodulation comprenant :

 - M premiers interféromètres (24, 241, 242), chaque premier interféromètre (24, 241, 242) comportant :

  - une entrée (24E, 241E, 242E) propre à recevoir un signal injecté, le signal injecté étant une partie de l'onde émise ;
  - un premier bras (30) et un deuxième bras (32), le deuxième bras (32) comprenant une première ligne à retard (33, 331, 332) propre à introduire un premier retard ($\tau_0$, $\tau^*_1$, $\tau^*_2$) ;
  - une sortie (24S, 241S, 242S) propre à fournir un signal d'interférence correspondant à l'interférence entre un signal issu du premier bras (30) et un signal issu du deuxième bras (32) ;

 - M détecteurs, chaque détecteur étant propre à détecter un signal dépendant du signal d'interférence obtenu en sortie (24S) de chaque premier interféromètre (24, 241, 242) ;
 - une unité de traitement (28) propre à calculer M signaux de démodulation, le j-ième signal de démodulation étant le produit de $R_j$+1 fonctions, j étant un entier variant de 1 à M, $R_j$ étant un entier prédéterminé correspondant au premier retard ($\tau_0$, $\tau^*_1$ ; $\tau^*_2$) du j-ième premier interféromètre (24, 241, 242), la p-ième fonction étant égale à :

$$S_{j,p}(t) = \exp\left[i\left\{\varphi\left(t - p\tau_j\right) - \varphi\left(t - (p+1)\tau_j\right)\right\}\right]$$

 où p est un entier compris entre 0 et $R_1$, $\tau_j$ est le premier retard que la ligne à retard du j-ième premier interféromètre (24, 241, 242) est propre à introduire,
 le dispositif de traitement (6) comportant un calculateur (38) configuré pour calculer un signal démodulé égal au produit successif du signal à démoduler avec M premier signaux, chaque premier signal correspondant à un des M signaux de démodulation et étant égal au signal de démodulation considéré ou au conjugué du signal de démodulation considéré.

**Patentansprüche**

1. Verfahren zum Demodulieren, welches die folgenden Schritte aufweist:

 - Bereitstellen eines zu demodulierenden Signals mittels Detektierens eines Interferenzsignals zwischen einem Teil einer elektromagnetischen Welle, welche mittels einer Sendestufe (7) zu einem Ziel gesendet wird, und einer Welle, welche vom Ziel (3) gestreut wird,
 - sukzessives Demodulieren des zu demodulierenden Signals mittels M Demodulationssignalen, um ein demoduliertes Signal zu erhalten, wobei M eine streng positive Ganzzahl ist, wobei das demodulierte Signal gleich dem sukzessiven Produkt des zu demodulierenden Signals mit M ersten Signalen ist, wobei jedes erste Signal zu einem der M Demodulationssignale korrespondiert und gleich dem in Betracht gezogenen Demodulationssignal oder dem Konjugierten des in Betracht gezogenen Demodulationssignals ist,

wobei die Demodulationssignale erhalten werden mittels Durchführens eines Verfahrens zum Erzeugen von M Demodulationssignalen, welches die folgenden Schritte aufweist:

- Bereitstellen von M Eingangssignalen, wobei jedes Eingangssignal ein Teil der gesendeten Welle ist,
- Einspeisen von jedem Eingangssignal in ein erstes Interferometer (24, 241, 242) von M ersten Interferometern, wobei jedes erste Interferometer (24, 241, 242) aufweist:

- einen Eingang (24E, 241E, 242E), in welchen das Eingangssignal eingespeist wird,
- einen ersten Arm (30) und einen zweiten Arm (32), wobei der zweite Arm (32) eine erste Verzögerungsleitung (33, 331, 332) aufweist, welche eine erste Verzögerung ($\tau_0$, $\tau_1^*$, $\tau_2^*$) einführt,
- einen Ausgang (24S, 241S, 242S), durch welchen ein Interferenzsignal austritt, welches zur Interferenz zwischen einem Signal, welches vom ersten Arm (30) stammt, und einem Signal, welches vom zweiten Arm (32) stammt, korrespondiert,

- Detektieren von M Ausgangssignalen, wobei jedes Ausgangssignal ein Signal ist, welches vom Interferenzsignal abhängig ist, welches am Ausgang (24S) von jedem ersten Interferometer (24, 241, 242) erhalten wird,
- Auswählen von M positiven Ganzzahlen ($R_1$, $R_2$, $R_3$), welche nicht alle null sind und welche jeweilig zur ersten Verzögerung ($\tau_0$, $\tau_1^*$, $\tau_2^*$) eines ersten Interferometers (24, 241, 242) korrespondieren,
- Berechnen von M Demodulationssignalen, wobei das j-te Demodulationssignal das Produkt von $R_j$+1 Funk-tionen $S_{j,\,p}$ ist, wobei j eine Ganzzahl ist, welche von 1 bis M variiert, wobei $R_j$ die ausgewählte Ganzzahl ist, welche zur ersten Verzögerung ($\tau_0$, $\tau_1^*$, $\tau_2^*$) des j-ten ersten Interferometers (24, 241, 242) korrespondiert, wobei die p-te Funktion gleich ist zu:

$$S_j(t) = \exp\big[i\big\{\varphi\big(t - p\tau_j\big) - \varphi\big(t - (p+1)\tau_j\big)\big\}\big],$$

wobei p eine Ganzzahl ist, welche zwischen 0 und $R_j$ liegt, und $\tau_j$ die erste Verzögerung ist, welche mittels der Verzögerungsleitung des j-ten ersten Interferometers (24, 241, 242) eingeführt wird.

2. Verfahren gemäß Anspruch 1, wobei mindestens ein j-tes erstes Interferometer mit N zweiten Interferometern (24B) verbunden ist, wobei N eine streng positive Ganzzahl ist, wobei das m-te zweite Interferometer (24B), wobei m eine zwischen 1 und N-1 liegende Ganzzahl ist, aufweist:

- einen Eingang (24BE),
- einen ersten Arm (30B) und einen zweiten Arm (32B), wobei der zweite Arm (32B) eine m-te Verzögerungsleitung (33B) aufweist, welche eine m-te zweite Verzögerung ($\tau_1$) einführt,
- einen Ausgang (24BS), durch welchen ein m-tes Interferenzsignal austritt, welches zur Interferenz zwischen einem Signal, welches vom ersten Arm (30B) stammt, und einem Signal, welches vom zweiten Arm (32B) des m-ten zweiten Interferometers (24B) stammt, korrespondiert, wobei der Ausgang (24BS) des m-ten zweiten Interferometers (24B) mit einem Eingang (24BE) des (m+1)-ten zweiten Interferometers (24B) verbunden ist,

wobei der Ausgang (24S) des ersten Interferometers (24) mit dem Eingang (24BE) des ersten zweiten Interferometers (24B) verbunden ist,
wobei das Verfahren ferner die folgenden Schritte aufweist:

- Detektieren des m-ten Interferenzsignals, welches am Ausgang (24BS) des N-ten zweiten Interferometers (24B) erhalten wird,
- Auswählen von M positiven Ganzzahlen ($K_1$, $K_2$, ..., $K_i$, ..., $K_N$), welche nicht alle null sind,
- Berechnen von N Demodulationssignalen, wobei das m-te Demodulationssignal das Produkt von $K_m$+1 Funk-tionen $S_{m,\,p}$ ist, wobei $K_m$ die ausgewählte Ganzzahl ist, welche zur Verzögerung ($\tau_0$, $\tau_1$, $\tau_i$) des m-ten dritten Interferometers (24, 24B) korrespondiert, wobei die p-te Funktion gleich ist zu:

$$S_{m,p}(t) = \exp[i\{\varphi(t - p\tau_m) - \varphi(t - (p+1)\tau_m)\}],$$

wobei p eine Ganzzahl ist, welche zwischen 0 und $K_m$ liegt.

3.  Verfahren gemäß Anspruch 1 oder 2, wobei mindestens ein Arm (30, 32) eines Interferometers (24) ein drittes Interferometer (240) aufweist, wobei das dritte Interferometer (240) aufweist:

    - einen Eingang (240E), in welchen ein Teil des Eingangssignals des Interferometers (24) eingespeist wird,
    - einen ersten Arm (300) und einen zweiten Arm (320), wobei der zweite Arm (320) eine Verzögerungsleitung (330) aufweist, welche eine dritte Verzögerung $\left(\tau_1'\right)$ einführt,
    - einen Ausgang (240S), durch welchen ein zweites Interferenzsignal austritt, welches zur Interferenz zwischen einem Signal, welches vom ersten Arm (30) des Interferometers (24) stammt, und einem Signal, welches vom zweiten Arm (32) des Interferometers (24) stammt, korrespondiert,

    und wobei das zweite Interferenzsignal zum Ausgang (24S) des Interferometers (24) geleitet wird.

4.  Verfahren gemäß irgendeinem der vorherigen Ansprüche, wobei das Verhältnis zwischen der größten Verzögerung $\left(\tau_0, \tau_1, \tau_1', \tau_1^*, \tau_2^*\right)$ welche mittels einer Verzögerungsleitung (33, 33B, 330, 331, 332) eingeführt wird, und der kleinsten Verzögerung $\left(\tau_0, \tau_1, \tau_1', \tau_1^*, \tau_2^*\right)$ welche mittels einer anderen Verzögerungsleitung (33, 33B, 330, 331, 332) eingeführt wird, vorzugsweise größer als 5, vorzugsweise größer als 10, zum Beispiel größer als 20 ist.

5.  Verfahren gemäß irgendeinem der vorherigen Ansprüche, wobei das Eingangssignal von einer Ferndetektionsvorrichtung (4), welche eine vorbestimmte Reichweite hat, stammt, und wobei mindestens eine Verzögerungsleitung (33, 33B, 330, 331, 332) eine optische Faser ist, deren Länge vorzugsweise kleiner oder gleich der Reichweite, vorteilhafterweise kleiner als das Fünffache der Reichweite, zum Beispiel kleiner als das Zehnfache der Reichweite ist.

6.  Verwendung des Verfahrens zum Demodulieren gemäß irgendeinem der Ansprüche 1 bis 5 zum Ermitteln der Geschwindigkeit und der Position eines Ziels.

7.  System zum Detektieren (2), insbesondere Lidar oder Radar, welches aufweist:

    - eine Stufe (7) zum Senden einer elektromagnetischen Welle zu einem Ziel (3),
    - eine Stufe (8) zum Empfangen einer elektromagnetischen Welle, welche vom Ziel (3) gestreut wird, wobei die Stufe (8) zum Empfangen geeignet ist, um ein Interferenzsignal zwischen der empfangenen Welle und einem Teil der erzeugten Welle zu erzeugen und um das Interferenzsignal zu detektieren, um ein zu demodulierendes Signal zu erzeugen,
    - eine Vorrichtung (6) zum Erzeugen von M Demodulationssignalen, wobei M eine streng positive Ganzzahl ist,

    wobei die Vorrichtung zum Erzeugen von M Demodulationssignalen aufweist:

    - M erste Interferometer (24, 241, 242), wobei jedes erste Interferometer (24, 241, 242) aufweist:

        - einen Eingang (24E, 241E, 242E), welcher imstande ist, ein eingespeistes Signal zu empfangen, wobei das eingespeiste Signal ein Teil der gesendeten Welle ist,
        - einen ersten Arm (30) und einen zweiten Arm (32), wobei der zweite Arm (32) eine erste Verzögerungsleitung (33, 331, 332) aufweist, welche imstande ist, eine erste Verzögerung $\left(\tau_0, \tau_1^*, \tau_2^*\right)$ einzuführen,
        - einen Ausgang (24S, 241S, 242S), welcher imstande ist, ein Interferenzsignal bereitzustellen, welches zur Interferenz zwischen einem Signal, welches vom ersten Arm (30) stammt, und einem Signal, welches vom zweiten Arm (32) stammt, korrespondiert,

- M Detektoren, wobei jeder Detektor imstande ist, ein Signal zu detektieren, welches vom Interferenzsignal abhängig ist, welches am Ausgang (24S) von jedem ersten Interferometer (24, 241, 242) erhalten wird,
- eine Verarbeitungseinheit (28), welche imstande ist, M Demodulationssignale zu berechnen, wobei das j-te Depmodulationssignal das Produkt von $R_j+1$ Funktionen ist, wobei j eine Ganzzahl ist, welche von 1 bis M variiert, wobei $R_j$ eine vorbestimmte Ganzzahl ist, welche zur ersten Verzögerung ($\tau_0$, $\tau_1^*$, $\tau_2^*$) des j-ten ersten Interferometers (24, 241, 242) korrespondiert, wobei die p-te Funktion gleich ist zu:

$$S_j(t) = \exp\left[i\left\{\varphi\left(t - p\tau_j\right) - \varphi\left(t - (p+1)\tau_j\right)\right\}\right],$$

wobei p eine Ganzzahl ist, welche zwischen 0 und $R_i$ liegt, und $\tau_j$ die erste Verzögerung ist, welche die Verzögerungsleitung des j-ten ersten Interferometers (24, 241, 242) einzuführen imstande ist,
wobei die Verarbeitungsvorrichtung (6) einen Berechner (38) aufweist, welcher eingerichtet ist, um ein demoduliertes Signal zu berechnen, welches gleich ist zum sukzessiven Produkt des zu demodulierenden Signals mit M ersten Signalen, wobei jedes erste Signal zu einem der M Demodulationssignale korrespondiert und gleich ist zum in Betracht gezogenen Demodulationssignal oder zum Konjugierten des in Betracht gezogenen Demodulationssignals.

**Claims**

1. A demodulation method, comprising steps for:

   - providing a signal to be demodulated by detecting an interference signal between part of an electromagnetic wave emitted by an emission stage (7) towards a target (3) and a scattered wave scattered by the target (3);
   - successively demodulating the signal to be demodulated using M demodulation signals obtained to obtain a demodulated signal, M being a strictly positive integer, the demodulated signal being equal to the successive product of the signal to be demodulated with M first signals, each first signal corresponding to one of the M demodulation signals and being equal to the considered demodulation signal or to the conjugate of the considered demodulation signal,

   the demodulation signals being obtained by implementing a method for generating M demodulation signals comprising steps for:

   - providing M input signals, each input signal being a part of the emitted wave;
   - injecting each input signal into a one first interferometer (24, 241, 242) of M first interferometers, each first interferometer (24, 241, 242) including:

     - an input (24E, 241E, 242E) in which the input signal is injected,
     - a first arm (30) and a second arm (32), the second arm (32)comprising a first delay line (33, 331, 332) introducing a first delay ($\tau_0$, $\tau^*_1$, $\tau^*_2$),
     - an output (24S, 241S, 242S) via which an interference signal exits corresponding to the interference between a signal from the first arm (30) and a signal from the second arm (32),

   - detecting M output signals, each output signal being a signal depending on the interference signal obtained at the output (24S) of each first interferometer (24, 241, 242);
   - choosing M positive integers that are not all equal to zero ($R_1$, $R_2$, $R_3$), corresponding each to the first delay ($\tau_0$, $\tau^*_1$, $\tau^*_2$) of a first interferometer (24, 241, 242) ;
   - computing M demodulation signals, the $j^{th}$ demodulation signal being the product of $R_j+1$ functions, j being an integrer varying from 1 to M, $R_j$ being the chosen integer that corresponds to the first delay ($\tau_0$, $\tau^*_1$, $\tau^*_2$) of the $j^{th}$ first interferometer, the $p^{th}$ function being equal to:

$$S_{j,p}(t) = \exp\left[i\left\{\varphi\left(t - p\tau_j\right) - \varphi\left(t - (p+1)\tau_j\right)\right\}\right]$$

where p is an integer comprised between 0 and $R_j$, $\tau_j$ is the first delay introduced by the delay line of the $j^{th}$ first interferometer.

2. The method according to claim 1, wherein at least one j$^{th}$ first interferometer is connected to N second interferometers (24B), N being a strictly positive integer, the m$^{th}$ second interferometer (24B), m being an integer comprised between 1 and (N-1), including:

    - an input (24BE),
    - a first arm (30B) and a second arm (32B), the second arm (32B) comprising a m$^{th}$ delay line (33B) introducing a m$^{th}$ second delay ($\tau_1$),
    - an output (24BS) via which a m$^{th}$ interference signal exits corresponding to the interference between a signal from the first arm (30B) and a signal from the second arm (32B) of the m$^{th}$ second interferometer (24B), the output (24BS) of the m$^{th}$ second interferometer being connected to the input (24BE) of the (m+1)$^{th}$ second interferometer (24B);

the output (24S) of the first interferometer (24) being connected to the input (24BE) of the first second interferometer (24B),
the method further comprising the following steps:

    - detecting the m$^{th}$ interference signal obtained at the output (24BS) of the N$^{th}$ second interferometer (24B);
    - choosing N positive integers that are not all equal to zero (K$_1$, K$_2$,..., K$_j$,... K$_N$) ;
    - computing N demodulation signals, the m$^{th}$ demodulation signal being the product of K$_m$+1 functions S$_{m,p}$, K$_m$ being the selected integer that corresponds to the delay ($\tau_0$, $\tau_1$, $\tau_2$) of the m$^{th}$ third interferometer (24, 24B), the p$^{th}$ function being equal to:

$$S_{m,p}(t) = \exp[i\{\varphi(t - p\tau_m) - \varphi(t - (p+1)\tau_m)\}]$$

where p is an integer comprised between 0 and K$_m$.

3. The method according to claim 1 or 2, wherein at least one arm (30, 32) of an interferometer (24) includes a third interferometer (240), the third interferometer (240) comprising:

    - an input (240E) in which part of the input signal of the interferometer (24) is injected;
    - a first arm (300) and a second arm (320), the second arm (320) comprising a delay line (330) introducing a third delay ($\tau'_1$),
    - an output (240S) via which a second interference signal exits corresponding to the interference between a signal from the first arm (30) of the interferometer (24) and a signal from the second arm (32) of the interferometer (24);

and wherein the second interference signal is conveyed toward the output (24S) of the interferometer (24).

4. The method according to any one of the preceding claims, wherein the ratio between the largest delay ($\tau_0$, $\tau_1$, $\tau'_1$, $\tau^*_1$, $\tau^*_2$) introduced by a delay line (33, 33B, 330, 331, 332) and the smallest delay ($\tau_0$, $\tau_1$, $\tau'_1$, $\tau^*_1$, $\tau^*_2$) introduced by another delay line (33, 33B, 330, 331, 332) is preferably greater than 5, preferably superior to 10, for example superior to 20.

5. The method according to any one of the preceding claims, wherein the input signal comes from a remote detection (4) device having a predetermined range, and in which at least one delay line (33, 33B, 330, 331, 332) is an optical fiber, the length of which is preferably smaller than or equal to the range, advantageously smaller than one fifth of the range, for example smaller than one tenth of the range.

6. A use of the demodulating method according to any one of claims 1 to 5 to determine the speed and position of a target.

7. A detection system (2), in particular lidar or radar, including:

    - a stage (7) for transmitting an electromagnetic wave toward a target (3);
    - a stage (8) for receiving an electromagnetic wave diffused by the target (3); the stage for receiving (8) being able to generate an interference signal between the receied wave and part of the generated wave and to detect the interference signal to generate a signal to be demodulated;

- a device (6) for generating M demodulation signals, M being a strictly positive integer;

the device for generating M demodulation signals comprising :

- M first interferometers, each first interferometer (24, 241, 242) including:

- an input (24E, 241E, 242E) able to receive an injected signal, the injected signal being part of the transmitted wave;
- a first arm (30) and a second arm (32), the second arm (32) comprising a first delay line (33, 331, 332) able to introduce a first delay ($\tau_0$, $\tau^*_1$, $\tau^*_2$);
- an output (24S, 241S, 242S) able to provide an interference signal corresponding to the interference between a signal from the first arm (30) and a signal from the second arm (32),

- M detectors, each detector being able to detect a signal depending on the interference signal obtained at the output (24S) of each first interferometer (24, 241, 242) ;
- a processing unit (28) able to compute M demodulation signals, the $j^{th}$ demodulation signal being the product of $R_j+1$ functions, j varying from 1 to M, $R_j$ being an predetermined integer corresponding to the first delay ($\tau_0$, $\tau^*_1$, $\tau^*_2$) of the first interferometer (24, 241, 242), the $p^{th}$ function being equal to:

$$S_{j,p}(t) = \exp[i\{\varphi(t - p\tau_j) - \varphi(t - (p+1)\tau_j)\}]$$

where p is an integer comprised between 0 and $R_j$, $\tau_j$ is the first delay that the delay line of the $j^{th}$ first interferometer can introduce,
the processing device (6) comprising a computer (38) suitable for computing a demodulated signal equal to the successive product of the signal to be demodulated by M first signals, each first signal corresponding to one of the M demodulation signals and being equal to the considered demodulation signal or to the conjugate of the considered demodulation signal.

## FIG.1

FIG.2

FIG.3

FIG.4

**FIG.5**

## FIG.6

**FIG.7**

## FIG.8